# EUROPÄISCHE PATENTSCHRIFT

(11) **EP 0 621 977 B1**
(45) Veröffentlichungstag und Bekanntmachung des Hinweises auf die Patenterteilung: **03.04.1996**
(21) Anmeldenummer: 93901637.4
(22) Anmeldetag: 13.01.1993
(51) Int. Cl.: G11B 27/00, G11B 17/22, G07F 17/30, G11B 23/30, G11B 27/11, G11B 27/34

(54) **ANORDNUNG ZUR TITELAUSWAHL VON JEWEILS EINE ANZAHL VON ABSPIELTITELN ENTHALTENDEN SPEICHERMITTELN IN EINEM MAGAZIN**
DEVICE FOR SELECTING TITLES OF RECORDINGS FROM STORAGE MEDIA CONTAINING A NUMBER OF RECORDINGS LOCATED IN A MAGAZINE
SELECTEUR DE TITRES ENREGISTRES SUR DES SUPPORTS D'ENREGISTREMENT DANS UN MAGASIN, CONTENANT CHACUN UNE PLURALITE DE TITRES A REPRODUIRE

(30) Priorität: 16.01.1992 DE 4200898
(43) Veröffentlichungstag der Anmeldung: 02.11.1994
(73) Patentinhaber: NSM AKTIENGESELLSCHAFT, D-55411 Bingen (DE)
(72) Erfinder: MULDER, Arjen, J., D-6531 Manubach (DE); KÜHL, Thomas, D-6534 Daxweiler (DE)
(74) Vertreter: Becker, Bernd, Dipl.-Ing.
(86) Internationale Anmeldenummer: DE9300024
(87) Internationale Veröffentlichungsnummer: WO9314502

(56) Entgegenhaltungen:
- EP-A- 0 265 167
- EP-A- 0 359 541
- EP-A- 0 425 168
- DE-A- 3 842 149
- FR-A- 2 517 863
- GB-A- 2 240 869
- GB-A- 2 241 105
- PATENT ABSTRACTS OF JAPAN vol. 10, no. 250 (P-491)(2306) 28. August 1986

## Beschreibung

Die Erfindung betrifft eine Anordnung zur Titelauswahl von jeweils eine Anzahl von Abspieltiteln enthaltenden Speichermitteln in einem Magazin, insbesondere von CDs in mehrere CDs enthaltenden CD-Boxen, wobei die Speichermittel eine Liste der auf ihnen enthaltenen Abspieltitel tragen und eine Abspieleinrichtung vorgesehen ist.

In einer Vielzahl von Gaststätten stehen münzbetätigte Musikautomaten, die ein Schallplattenmagazin sowie eine Titelanzeige und eine Wähltastatur aufweisen. Nach Münzeinwurf und Betätigung der Wähltastatur werden die entsprechenden Schallplatten aus dem Magazin entnommen und die ausgewählten Titel gespielt. Es sind diverse Vorrichtungen zum Abspielen ausgewählter Titel bekannt (vgl. z.B. DE-OS 39 22 721).

In ähnlicher Weise gibt es inzwischen auch CDs, d.h. optische Platten, die in sogenannten CD-Boxen magaziniert sind. Sollen bestimmte Titel dieser CDs gespielt werden, so müssen diese nach wie vor auf relativ umständliche Weise ausgewählt bzw. eingegeben werden. Gemäß einer ersten Alternative wird in bekannter Weise eine Wähltastatur mit optischer Titelangabe betätigt.

Die zweite Alternative sieht für die Eingabe einen Code vor. Dabei muß der Benutzer als erstes den dem gewünschten Abspieltitel zugeordneten Code feststellen. Anschließend muß der der betreffenden CD entsprechende Code, dann gewöhnlich ein weiterer zwei- oder dreistelliger Code und schließlich noch der meist zweistellige Titelcode eingeben werden. Dies bedeutet, daß ein insgesamt mindestens fünfstelliger Code verwendet werden muß. Sollen mehrere Abspieltitel auf einmal eingegeben werden, um eine Abspielsequenz vorab festzulegen, erweist sich dieses Vorgehen als umständlich und auch fehlerträchtig, da der Eingabeaufwand beträchtlich ist.

Die Verwendung von optischen bzw. Strichcodes ist jedermann aus dem Bereich des Einzelhandels und insbesondere der Kaufhäuser für die Eingabe der Warenart und des Verkaufspreises bekannt.

Es ist auch bereits ein CD-Handhabungssystem entwickelt worden, das unter Verwendung von Strichcodes die Verwaltung und Registrierung von CDs sowie von deren Standort ermöglicht (vgl. Prospekt "Discover" der Firma Playsafe Monitoring Limited, Bath, Großbritannien).

In der EP-A-0 265 167 ist die Auswahl von CD-titeln mit anschließender Speicherung beschrieben, nicht jedoch ein Online-Abspielbetrieb direkt nach dem Lesen. Somit wird eine mittels des Lichtgriffels ausgewählte Titelabspielfolge zunächst gespeichert (vgl. Spalte 8, Zeilen 26 bis 27, ferner z.B. Spalte 21, Zeilen 48 bis 50). Die Titelfolge kann mittels eines weiteren Programms angezeigt werden und dann als Ganzes entweder per Eingabe oder automatisch für einen Abspielvorgang abgerufen werden (vgl. Spalte 20, Zeile 49 bis Spalte 21, Zeile 2).

Die DE-A-38 42 149 betrifft die Speicherung einer Abspielfolge von CD-Titeln mittels Strichcodes. Die Abspielfolge kann dabei bereits werksseitig oder durch den Benutzer vorgesehen werden, ist jedoch mit ihrer Auswahl festgelegt. Eine Titelauswahl on-line oder sogar plattenübergreifend ist nicht vorgesehen.

Ferner befaßt sich die GB-A-2 241 105 mit der Auswahl von festen Titelfolgen, nämlich kompletter CDs. Eine flexible Auswahl einer Folge von Titeln im On-lin-Betrieb ist nicht vorgesehen.

Der Erfindung liegt die Aufgabe zugrunde, es zu ermöglichen, Abspieltitel aus einer Anzahl von Speichermitteln in einem Magazin, insbesondere von CDs, auf einfache Weise auszuwählen.

Diese Aufgabe ist erfindungsgemäß bei einer Anordnung mit den Merkmalen des Anspruchs 1 gelöst. Vorteilhafte Weiterbildungen der erfindungsgemäßen Anordnung sind Gegenstand der Unteransprüche.

Die erfindungsgemäße Anordnung ermöglicht die Titelauswahl von jeweils eine Anzahl von Abspieltiteln enthaltenden Speichermitteln in einem Magazin, insbesondere von CDs in mehrere CDs enthaltenden CD-Boxen. Die Speichermittel tragen dabei eine Liste der auf ihnen enthaltenen Abspieltitel und es ist eine Abspieleinrichtung vorgesehen. Dabei umfaßt die Anordnung
- eine Einrichtung der Abspieleinrichtung, die es gestattet, ausgewählte Abspieltitel von den jeweiligen Speichermitteln abzuspielen,
- eine Dekodiereinrichtung der Abspieleinrichtung, die eingegebene Codes in ausgewählte Abspieltitel umwandelt,
- einen Lichtgriffel zum Lesen von optischen Codes, der an die Abspieleinrichtung anschließbar ist, wobei die gelesenen Codes der Dekodiereinrichtung zugeführt werden, und
- eine von den Speichermitteln und der Abspieleinrichtung separate Zusammenstellung von optischen Codes, die jeweils den einzelnen Abspieltiteln der Speichermittel zugeordnet sind und von dem Lichtgriffel gelesen werden können.

Durch das Vorsehen des optischen Strichcodes und der Dekodiereinrichtung in der Abspieleinrichtung ist das Auswählen der gewünschten Abspieltitel gemäß der Erfindung sehr einfach. Für das Auswahlverfahren braucht lediglich der Lichtgriffel genommen werden und mit diesem die gewünschten Titel, d.h. deren optische Codes, überstrichen zu werden, d.h. die Auswahl ist vollständig in die visuelle Titelsuche integriert. Die gelesenen optischen Codes werden dann über eine Leitung oder mittels Fernübertragung zur Dekodiereinrichtung übermittelt, von der die ausgewählten Abspieltitel an die Abspieleinrichtung für den Abspielbetrieb übermittelt werden. Auf diese Weise ist der Bedienungsaufwand für eine Bedienungsperson auf ein Minimum, nämlich auf die eigentliche Auswahl und lediglich die Eingabe einer Abspielweisung (überstreichung des Titelcodes), reduziert. Das Abspielen insbesondere von Musikstücken ist auf diese Weise nicht mit Arbeit verbunden und bedeutet vielmehr reines Vergnügen.

Selbstverständlich muß es sich bei den Abspielmitteln nicht nur um CDs handeln. Diese können auch Schallplatten, Kassetten, Disketten etc. sein. Bei den Abspieltiteln kann es sich außer um Musikstücke auch um Sprachwerke, graphische Informationen, kurzum eigentlich um jede speicherbare Informationseinheit handeln.

Zweckmäßig handelt es sich bei den optischen Codes um Strichcodes, die sich besonders einfach lesen lassen.

Bei einer bevorzugten Ausführungsform der Erfindung besteht die Zusammenstellung der Titelcodes aus einem oder mehrere die Codes tragenden Bögen, insbesondere in Form einer Sammelmappe, eines Albums oder eines Buches. Der Benutzer nimmt dann den Bogen oder z.B. das Buch und sieht sich die Titelübersicht mit den gewöhnlich dabei stehenden Codes an. Soll ein entsprechender Titel gespielt werden, braucht der Benutzer lediglich den Lichtgriffel zu nehmen und über den Code zu streichen.

Vorteilhaft sind die Codes auf Aufklebern vorgesehen. Dies ermöglicht auf einfache Weise das Einrichten der Titel- und Codezusammenstellung durch den Benutzer selbst. Außerdem können die Aufkleber auch nachträglich auf Hüllen, Inhaltslisten, Aufbewahrbehältern etc. der Speichermittel angebracht werden. Die Speichermittel können so in üblicher Weise aufbewahrt werden.

Erfindungsgemäß können die Codes erste und zweite Codes umfassen, wobei die ersten Codes jeweils einem Speichermittel und die zweiten Codes jeweils einem Abspieltitel eines Speichermittels zugeordnet sind derart, daß die Kombination der ersten und zweiten Codes eine eindeutige Identifizierung sämtlicher Abspieltitel in einem Magazin ermöglicht. So stellen beispielsweise der erste Code die Folgenummern der Speichermittel wie CDs in einer Zusammenstellung dar und der zweite Code etwa die Zahlen 1 bis 30 für die Titel. Zur Titelauswahl brauchen dann lediglich mit dem Lichtgriffel die CD-Folgenummer und dann der Titelcode, d.h. die Titelnummer, überstrichen zu werden, und zwar unabhängig davon, ob die Codes in Buchform oder auf den Hüllen, Aufbewahrbehältern etc. vorgesehen sind. Es handelt sich um zwei Vorgänge, die vom Benutzer sozusagen automatisch ausgeführt werden können.

Eine praktische Anordnung für die Titelauswahl ergibt sich, wenn die Hüllen oder Umschläge in den Zusammenstellungen enthalten sind. Es können dann die Titelangaben mit den Abbildungen in Alben oder dergleichen aufbewahrt werden, wie dies von Fotografien bekannt ist. Jeder Ablageplatz für eine Hülle ist dann mit einem Folgecode und den Titelcodes versehen.

Für das Aufbewahren der Titelzusammenstellungen vorteilhaft ist, wenn ein weiteres Speichermittel für die Zusammenstellung der Abspieltitel und deren Code-Zuordnung vorgesehen ist. Dies ermöglicht eine einfache Vervielfältigung und Abwandlung der Titelzusammenstellungen, die z.B. durch einen Bildschirm oder einen Drucker auch als Code sichtbar und für einen Lichtgriffel lesbar gemacht werden können.

Es kann ferner eine Diskette zum Speichern der Zusammenstellung der Abspieltitel und deren Code-Zuordnung vorgesehen sein. Diese ermöglicht ebenso eine Datenübertragung und -ausgabe wie das oben erwähnte Speichermittel.

Für den Anschluß an weitere Speicher- und Auswertemittel beispielsweise kann eine externe Eingabeeinheit und eine Datenleitung zur Abspieleinrichtung für die Eingabe der ausgewählten Abspieltitel vorgesehen sein.

Vorzugsweise sind optische Bedienungscodes zusätzlich zu den Auswahlcodes vorgesehen. Bei diesen kann es sich zum Beispiel um die Befehle "Fertig", "Löschen", "Irrtum", etc. handeln.

Zweckmäßig ist auch eine Anzeigeeinrichtung vorgesehen. Diese ermöglicht der Bedienungsperson eine Kontrolle des Auswahl- und Eingabevorgangs. Es können auch Benutzungshinweise über die Anzeigeeinrichtung gegeben werden, wodurch die Bedienung erleichert ist.

Für die Übertragung der vom Lichtgriffel gelesenen Codes zur Abspieleinrichtung ist vorteilhaft eine Fernübertragung vorgesehen. Auf diese Weise kann auf störende Kabel etc. verzichtet werden und der Bedienungskomfort ist erhöht.

Die erfindungsgemäße Anordnung ermöglicht es so beispielsweise, die Information betreffend eine bestimmte CD und außerdem die Numerierung der einzelnen Stücke auf Software zu bringen, so daß nicht mehr die CD selbst und der betreffende Titel direkt eingegeben werden müssen. Vielmehr können die gewünschten Informationen so entsprechend der Ausstattung der Abspieleinrichtung oder weiterer peripherer Einrichtungen über einen beliebigen Datenträger wie z.B. einer Diskette, einer zusätzlichen CD oder über eine Datenleitung eingegeben werden.

Die Erfindung wird im folgenden weiter anhand eines Ausführungsbeispiels und der Zeichnung beschrieben. In der Zeichnung zeigen:
- Fig. 1: eine Code-Zusammenstellung für CD-Titel in Buchform, wobei die CD-Hüllen in dem Buch enthalten sind, und
- Fig. 2: eine CD-Hülle mit CD- und Titelcode.

Im folgenden wird auf die Zeichnung Bezug genommen. Das dargestellte Ausführungsbeispiel der erfindungsgemäßen Anordnung betrifft CDs, die z.B. in einer CD-Box magaziniert sind. Die einzelnen CDs sind mit einer Hülle bzw. einem Umschlag versehen, die jeweils aus den CD-Kassetten herausgenommen und in Buchform zur Vereinfachung der Titelwahl zusammengestellt sind.

Die Abspieleinrichtung selbst ist mit einer Einrichtung versehen, die bei Eingabe ausgewählter Titel bzw. Titelcodes die betreffende CD aus dem Magazin nimmt und den ausgewählten Titel abspielt.

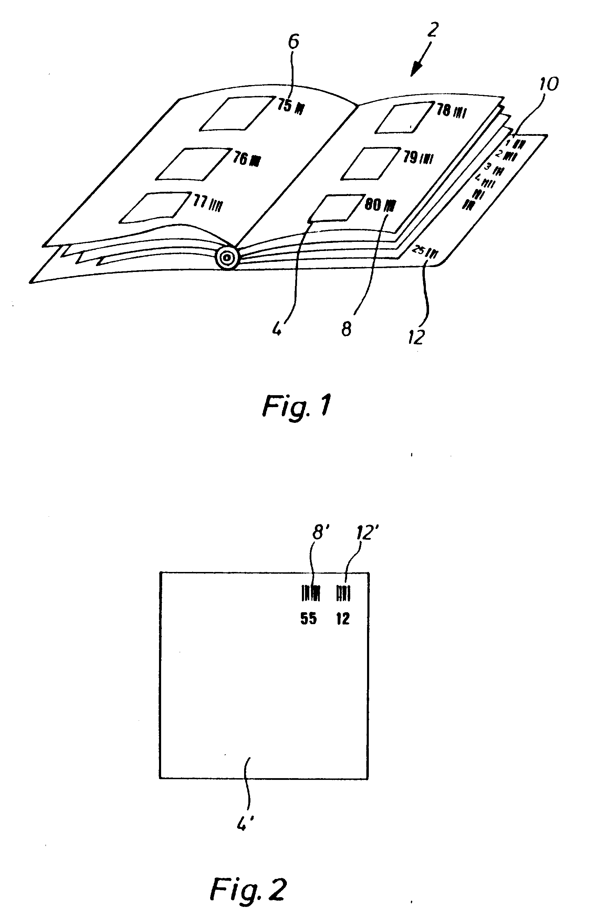

Fig. 1 zeigt ein aufgeschlagenes Buch 2, in dem die Hüllen 4 der in der CD-Box magazinierten CDs abgelegt sind. Die CDs sind mit fortlaufenden ganzzahligen Folgenummern gekennzeichnet, die in dem Buch in arabischen Zahlen 6 und in Form von Strichcodes 8 neben den Hüllen vorgesehen sind. Hinten im Buch sind die Titel der CDs jeweils untereinander in arabischen Zahlen 10 und in Form von Strichcodes 12 enthalten.

Der Auswahlvorgang bei diesem Ausführungsbeispiel erfolgt, indem zunächst vorne im Buch die gewünschte CD ausgesucht und deren Folgenummerncode mittels eines Lichtgriffels erfaßt wird. Anschließend wird der Titelteil des Buchs aufgeschlagen und aus dem Titelverzeichnis der oder die gewünschten Titel ausgewählt und ebenfalls mittels des Lichtgriffels erfaßt. Die Übermittlung des Codes erfolgt über Datenleitung oder Fernübertragung an die Abspieleinrichtung.

Eine Variante dieses Ausführungsbeispiels ist in Fig. 2 veranschaulicht. In diesem Fall trägt die Hülle 4' selbst den Folgenummerncode 8' und die Titelcodes 12', von denen lediglich einer dargestellt ist. Dies vereinfacht die Auswahl, da nicht für jeden Titel einer CD der Titelteil des Buchs aufgeschlagen werden muß.

Im übrigen ist selbstverständlich im Rahmen der Erfindung unter einem Lichtgriffel auch ein Handscanner zu verwenden, mit dem dann gegebenenfalls auch Bilder von Plattenhüllen abgescannt und gespeichert werden können.

## Patentansprüche

1. Anordnung zur Titelauswahl von jeweils eine Anzahl von Abspieltiteln enthaltenden Speichermitteln in einem Magazin, insbesondere von CDs in mehrere CDs enthaltenden CD-Boxen,
- wobei die Speichermittel eine Liste der auf ihnen enthaltenen Abspieltitel tragen und eine Abspiel-einrichtung vorgesehen ist,
- wobei eine Einrichtung der Abspieleinrichtung vorgesehen ist, die es gestattet, ausgewählte Abspieltitel von den jeweiligen Speichermitteln abzuspielen,
- wobei eine Dekodiereinrichtung der Abspieleinrichtung vorgesehen ist, die eingegebene Codes in ausgewählte Abspieltitel umwandelt,
- wobei eine von den Speichermitteln und der Abspieleinrichtung separate Zusammenstellung (2) von optischen Codes (8, 12) vorgesehen ist, die jeweils den einzelnen Abspieltiteln der Speichermittel zugeordnet sind,
- wobei ein Lichtgriffel zum Lesen von Abspieltiteln vorgesehen ist,
dadurch gekennzeichnet, daß
- der Lichtgriffel zum Auswählen von optischen Codes von Abspieltiteln mit der Dekodiereinrichtung verbunden ist und
- die Dekodiereinrichtung mit der Abspieleinrichtung verbunden ist derart, daß die Dekodiereinrichtung in der Lage ist, die mittels des Lichtgriffels ausgewählten Abspieltitel an die Abspieleinrichtung zu übermitteln.

2. Anordnung nach Anspruch 1, dadurch gekennzeichnet, daß die optischen Codes (8, 12) Strichcodes sind.

3. Anordnung nach Anspruch 1 oder 2, dadurch gekennzeichnet, daß die Zusammenstellung (2) der Codes ein oder mehrere die Codes (8, 12) tragende Bögen, insbesondere in Form einer Sammelmappe, eines Albums oder in Buchform sind.

4. Anordnung nach einem der Ansprüche 1 bis 3, dadurch gekennzeichnet, daß die Codes auf Aufklebern vorgesehen sind.

5. Anordnung nach einem der Ansprüche 1 bis 4, dadurch gekennzeichnet, daß die Codes (8, 12; 8', 12') erste und zweite Codes umfassen, wobei die ersten Codes (8; 8') jeweils einem Speichermittel und die zweiten Codes (12; 12') jeweils einem Abspieltitel eines Speichermittels zugeordnet sind derart, daß die Kombination der ersten und zweiten Codes eine eindeutige Identifizierung sämtlicher Abspieltitel in einem Magazin ermöglicht.

6. Anordnung nach einem der Ansprüche 1 bis 5, dadurch gekennzeichnet, daß die Codes (8', 12') auf den Hüllen (4') oder Inhaltslisten und/oder den Aufbewahrbehältern der Speichermittel angebracht sind.

7. Anordnung nach Anspruch 3 oder Anspruch 6 und einem der vorhergehenden Ansprüche, dadurch gekennzeichnet, daß die Hüllen (4) in den Zusammenstellungen (2) enthalten sind.

8. Anordnung nach einem der Ansprüche 1 bis 7, dadurch gekennzeichnet, daß ein weiteres Speichermittel für die Zusammenstellung der Abspieltitel und deren Code-Zuordnung vorgesehen ist.

9. Anordnung nach einem der Ansprüche 2 bis 8, dadurch gekennzeichnet, daß eine Diskette zum Speichern der Zusammenstellung der Abspieltitel und deren Code-Zuordnung vorgesehen ist.

10. Anordnung nach einem der Ansprüche 1 bis 9, dadurch gekennzeichnet, daß eine externe Eingabeeinheit und eine Datenleitung zur Abspieleinrichtung für die Eingabe der ausgewählten Abspieltitel vorgesehen ist.

11. Anordnung nach einem der Ansprüche 1 bis 10, dadurch gekennzeichnet, daß weitere optische Bedienungscodes vorgesehen sind.

12. Anordnung nach einem der Ansprüche 1 bis 11, dadurch gekennzeichnet, daß eine Anzeigeeinrichtung vorgesehen ist.

13. Anordnung nach einem der Ansprüche 1 bis 12, dadurch gekennzeichnet, daß eine Fernübertragung der vom Lichtgriffel gelesenen Codes zur Abspieleinrichtung vorgesehen ist.

## Claims

1. Arrangement for selecting titles from a number of storage means containing titles of recordings in a magazine, more especially CDs in CD boxes containing a plurality of CDs,
- the storage means having a list of the titles of recordings contained thereon, and a player being provided,
- a means being provided in the player for permitting selected titles of recordings from the respective storage means to be played,
- a decoder being provided in the player for converting inputted codes into selected titles of recordings,
- a compilation (2) of optical codes (8, 12) being provided, which is separate from the storage means and the player, which codes are each associated with the individual titles of recordings in the storage means, and
- a light pen being provided to read titles of recordings,
characterised in that
- the light pen for selecting optical codes of titles of recordings is connected to the decoder, and
- the decoder is connected to the player in such a manner that the decoder is able to transmit to the player the titles of recordings which have been selected by means of the light pen.

2. Arrangement according to claim 1, characterised in that the optical codes (8, 12) are bar codes.

3. Arrangement according to claim 1 or 2, characterised in that the compilation (2) of the codes are one or a plurality of sheets of paper provided with the codes (8, 12), more especially in the form of a catalogue or an album or in book form.

4. Arrangement according to one of claims 1 to 3, characterised in that the codes are provided on stickers.

5. Arrangement according to one of claims 1 to 4, characterised in that the codes (8, 12; 8', 12') include first and second codes, the first codes (8; 8') each being associated with a respective storage means and the second codes (12; 12') each being associated with a respective title of a recording in a storage means, such that the combination of the first and second codes permits all of the titles of recordings in a magazine to be clearly identified.

6. Arrangement according to one of claims 1 to 5, characterised in that the codes (8', 12') are situated on the covers (4') or content lists and/or the storage containers of the storage means.

7. Arrangement according to claim 3 or claim 6 and one of the preceding claims, characterised in that the covers (4) are contained in the compilations (2).

8. Arrangement according to one of claims 1 to 7, characterised in that an additional storage means is provided for the compilation of the titles of recordings and their code association.

9. Arrangement according to one of claims 2 to 8, characterised in that a diskette is provided for the storage of the compilation of the titles of recordings and their code association.

10. Arrangement according to one of claims 1 to 9, characterised in that an external input unit and a data line to the player are provided for inputting the selected titles of recordings.

11. Arrangement according to one of claims 1 to 10, characterised in that additional optical operator codes are provided.

12. Arrangement according to one of claims 1 to 11, characterised in that a display device is provided.

13. Arrangement according to one of claims 1 to 12, characterised in that a remote transmission of the codes, read by the light pen, to the player is provided.

## Revendications

1. Dispositif pour la sélection de moyens de mémoire contenant respectivement un nombre de morceaux de musique dans un magasin, en particulier de CD, dans plusieurs boîtes de CD contenant des CD,
- les moyens de mémoire portant une liste des morceaux de musique qu'ils contiennent et un dispositif de lecture étant prévu,
- un dispositif du dispositif de lecture étant prévu, lequel permet de passer des morceaux de musique sélectionnés à partir des moyens de mémoire respectifs,
- un dispositif de décodage du dispositif de lecture étant prévu, lequel transforme les codes introduits en morceaux de musique sélectionnés,
- un classement (2) de codes optiques (8, 12) qui sont associés respectivement aux différents morceaux de musique des moyens de mémoire étant prévu, séparé des moyens de mémoire et du dispositif de lecture,
- un photostyle étant prévu pour la lecture de morceaux de musique,
caractérisé en ce que
- le photostyle pour la sélection de codes optiques de morceaux de musique est relié au dispositif de décodage, et
- le dispositif de décodage est relié au dispositif de lecture de telle sorte que le dispositif de décodage est en mesure de transmettre au dispositif de lecture les morceaux de musique sélectionnés au moyen du photostyle.

2. Dispositif selon la revendication 1, caractérisé en ce que les codes optiques (8, 12) sont des codes à barres.

3. Dispositif selon la revendication 1 ou 2, caractérisé en ce que le classement (2) des codes est une ou plusieurs feuilles portant les codes (8,12), en particulier sous forme d'un classeur, d'un album ou livre.

4. Dispositif selon l'une des revendications 1 à 3, caractérisé en ce que les codes sont prévus sur des autocollants.

5. Dispositif selon l'une des revendications 1 à 4, caractérisé en ce que les codes (8, 12 ; 8', 12') comprennent des premiers et deuxièmes codes, les premiers codes (8 ; 8') étant respectivement associés à un moyen de mémoire et les deuxièmes codes (12 ; 12') respectivement à un morceau de musique d'un moyen de mémoire, de telle sorte que la combinaison des premiers et des deuxièmes codes permet une identification claire de tous les morceaux de musique dans un magasin.

6. Dispositif selon l'une des revendications 1 à 5, caractérisé en ce que les codes (8', 12') sont disposés sur les enveloppes (4') ou les listes de contenu et/ou les récipients de conservation des moyens de mémoire.

7. Dispositif selon la revendication 3 ou la revendication 6 et l'une des revendications précédentes, caractérisé en ce que les enveloppes (4) sont contenues dans les classements (2).

8. Dispositif selon l'une des revendications 1 à 7, caractérisé en ce qu'un autre moyen de mémoire est prévu pour le classement des morceaux de musique et leur association à des codes.

9. Dispositif selon l'une des revendications 2 à 8, caractérisé en ce qu'une disquette est prévue pour mémoriser le classement des morceaux de musique et leur association à des codes.

10. Dispositif selon l'une des revendications 1 à 9, caractérisé en ce qu'une unité d'introduction externe et une ligne de données sont prévues pour le dispositif de lecture pour l'introduction des morceaux de musique sélectionnés.

11. Dispositif selon l'une des revendications 1 à 10, caractérisé en ce que d'autres codes de service optiques sont prévus.

12. Dispositif selon l'une des revendications 1 à 11, caractérisé en ce qu'un dispositif d'affichage est prévu.

13. Dispositif selon l'une des revendications 1 à 12, caractérisé en ce qu'une télétransmission des codes lus par le photostyle au dispositif de lecture est prévue.
